# EUROPEAN PATENT SPECIFICATION

(11) **EP 3 660 266 B1**
(45) Date of publication and mention of the grant of the patent: **11.10.2023**
(21) Application number: 18209493.8
(22) Date of filing: 30.11.2018
(51) Int. Cl.: E21C 35/24, E21F 13/00, G05D 1/02, G01C 21/34

(54) **MODEL GENERATION FOR ROUTE PLANNING OR POSITIONING OF MOBILE OBJECT IN UNDERGROUND WORKSITE**
MODELLERZEUGUNG ZUR ROUTENPLANUNG ODER POSITIONIERUNG EINES MOBILEN OBJEKTES IN UNTERTAGEBAUSTELLEN
GÉNÉRATION DE MODÈLES POUR LA PLANIFICATION D'ITINÉRAIRES OU LE POSITIONNEMENT D'OBJETS MOBILES DANS UN CHANTIER SOUTERRAIN

(43) Date of publication of application: 03.06.2020
(73) Proprietor: Sandvik Mining and Construction Oy, 33311 Tampere (FI)
(72) Inventor: PUURA, Jussi, 33311 Tampere (FI); von ESSEN, Tomi, 33330 Tampere (FI)
(74) Representative: Sandvik

(56) References cited:
- US-A1- 2014 125 655
- US-A1- 2015 268 058
- US-B1- 7 069 124

## Description

### FIELD

The present invention relates to modelling of underground worksite and for generating a model for route planning and/or positioning of a mobile object operating in the underground worksite.

### BACKGROUND

Underground worksites, such as hard rock or soft rock mines, typically comprise a variety of operation zones intended to be accessed by different types of mobile work machines, herein referred to as mobile vehicles. An underground mobile vehicle may be an unmanned, e.g. remotely controlled from a control room, or a manned mobile vehicle, i.e. operated by an operator sitting in a cabin of the mobile vehicle. Mobile vehicles operating in underground work sites may be autonomously operating, i.e. automated or semi-automated mobile vehicles, which in their normal operating mode operate independently without external control but which may be taken under external control at certain operation areas or conditions, such as during states of emergencies. Location tracking of mobile objects, such as mobile vehicles and persons is required at many worksites.

WO2015106799 discloses a system for scanning surroundings of a vehicle for producing data to determining position and orientation of the vehicle. The vehicle is provided with a reference point cloud data of the mine. The control unit is configured to match second point cloud data produced by a scanning device of the vehicle to the reference point cloud data in order to determine position data of the vehicle. Changed point cloud objects may be detected and new point cloud data may be incorporated to the reference point cloud data. To avoid or reduce irrelevant data in the reference point data, the mine vehicle may maintain data of surrounding surfaces and remove point cloud data of other objects.

US 2015/268058 discloses a real-time system for multi-modal 3G geospatial mapping, object recognition, scene annotation and analysis system to process live 3D and 2D image data from image sensor(s). The system comprises an object/scene recognition and classification subsystem, which comprises a large scale object and region extraction module.

US 7069124 discloses a robotic system for modelling, mapping and exploring sub-terranean voids. A robot captures at first position of a void local range data, which is incorporated into a full data map of the void. A route to a second position is calculated based on analysis of the full map data including the captured local range data.

### SUMMARY

The invention is defined by the features of the independent claims. Some specific embodiments are defined in the dependent claims.

According to an embodiment, surface normal is determined for each of points in a sub-set of points of the three-dimensional model, and the floor points are selected on the basis of the surface normal directions of the points in the sub-set of points.

According to an embodiment a floor point probability indicator is calculated for each point floor point candidate, and floor point candidates having a floor point probability within a floor point margin are selected as the floor points.

According to an embodiment, the apparatus is a server or part of a control system configured to visualize the at least one monitored feature on at least one display device.

### BRIEF DESCRIPTION OF THE DRAWINGS

FIGURE 1 illustrates an example of an underground work site;
FIGURE 2 illustrates a model of an underground worksite;
FIGURES 3 and 4 illustrate methods according to at least some embodiments;
FIGURES 5a and 5b illustrate floor point identification;
FIGURES 6a and 6b illustrate simplified model generation options;
FIGURES 7a to 7c illustrate floor models;
FIGURE 8 illustrates an example system according to at least some embodiments; and
FIGURE 9 illustrate an apparatus capable of supporting at least some embodiments.

### EMBODIMENTS

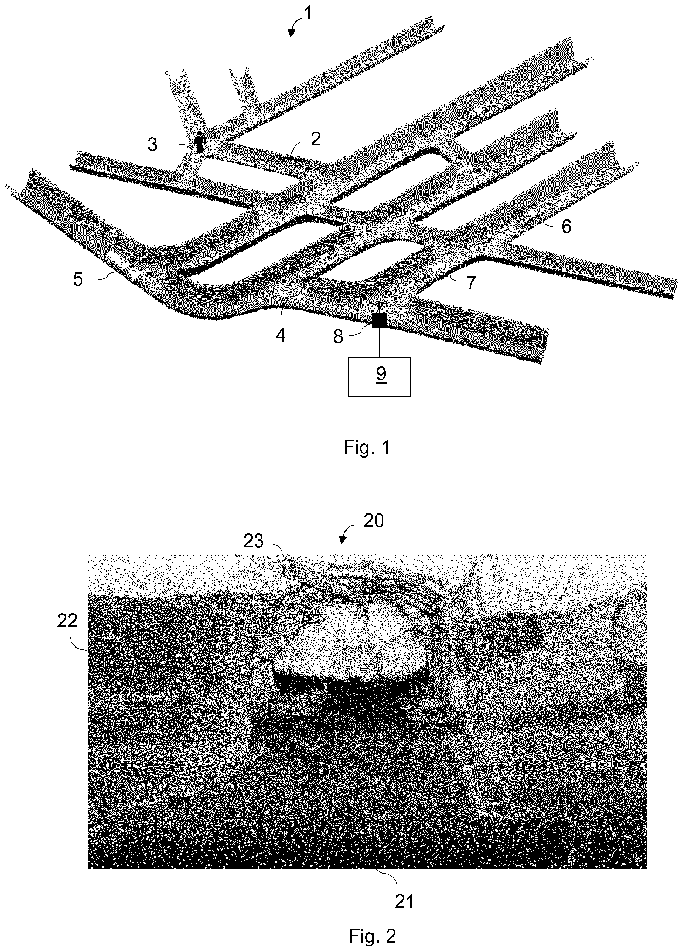

Figure 1 illustrates an underground worksite 1 comprising a network 2 of underground tunnels. A plurality of mobile objects, such as persons or pedestrians 3 and/or mobile vehicles 4, 5, 6, 7 may be present in and move between different areas or operation zones of the worksite 1.

The term underground worksite herein is intended to include a variety of underground worksites, including for example different kinds of underground excavation worksites, such as mines, roadwork sites, and railroad worksites. The term mobile object in this specification and claims is intended to include all mobile objects which may have an access into an operation zone of a worksite, such as mobile vehicles and human beings being at work in the worksite. The term mobile vehicle herein refers generally to mobile work machines suitable to be used in the operation of different kinds of underground mining or construction excavation worksites, such as lorries, dumpers, vans, mobile rock drilling or milling rigs, mobile reinforcement machines, and bucket loaders or other kind of mobile work machines which may be used in different kinds of excavation worksites. The mobile vehicles may be autonomously operating mobile vehicles, which herein refers to automated or semi-automated mobile vehicles.

The worksite 1 comprises a communications system, such as a wireless access system comprising a wireless local area network (WLAN), comprising a plurality of wireless access nodes 8. The access nodes 8 may communicate with wireless communications units comprised by the vehicles or carried by the pedestrians and with further communications devices 9, such as network device(s) configured to facilitate communications with an on-site (underground or above-ground) or remote control and/or monitoring system server.

The worksite 1 may further comprise various other entities not shown in Figure 1, such as various system elements for power supply, ventilation, communications, and automation. For example, the worksite may comprise a passage control system comprising passage control units (PCU) separating operation zones, some of which may be for autonomously operating vehicles. The passage control system and associated PCUs may be configured to allow or prevent movement of one or more vehicles and/or pedestrians between zones.

Figure 2 illustrates an example of a 3D model of an underground worksite portion and tunnel thereof, illustrating floor 21, walls 22, and ceiling 23 of the tunnel. The 3D model may comprise or be formed based on point cloud data generated on the basis of the scanning. The 3D model may be stored in a database accessible by one or more modules of a computing apparatus, such as a mine model processing module, a user interface or visualizer module, a route planning module, and/or a positioning service module. In other embodiments, the 3D model may be a design model or may be generated on the basis of a design model, such as a CAD model, created by a mine designing software or a 3D model created on the basis of tunnel lines and profiles designed in a drill and blast design software, such as iSURE^{®}. Thus, same analysis or processing can be done on measured or initial planned model of the tunnel environment.

In complex 3D environments, such as underground mines, using the full 3D model of the environment may be too complex and resource consuming. For example, more efficient route calculation or location tracking of vehicles or pedestrians is achieved on a map that only comprises the floor of the mine, possibly with attributes associated with some or all of the floor points. There is now provided improved systems for segmentation and analysis of worksite models for work sites.

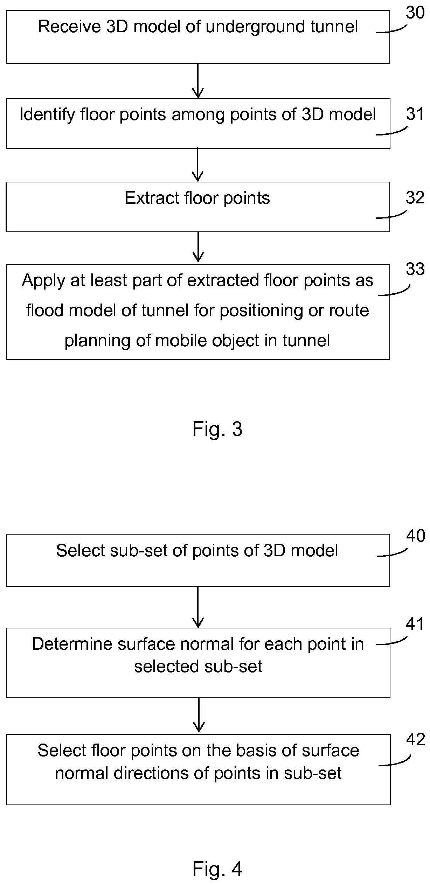

Figure 3 illustrates a method for model processing in an underground worksite. The method may be implemented by an apparatus configured for processing a model for an underground worksite, such as a server, a worksite operator, designer, or controller workstation, a mobile unit, a vehicle on-board control device, or other kind of appropriately configured data processing device. The apparatus may be configured to perform a model processing or generation algorithm which may carry out a model processing procedure.

A 3D model of an underground tunnel is received 30. Floor points among points of the 3D model are identified 31. This refers to detecting points on the bottom floor level 21 of the tunnel on the basis of performing one or more evaluation or filtering procedures.

The identified floor points are extracted 32. This refers to forming a further dataset on the basis of the identified floor points. At least a part of the extracted floor points are applied 33 as a floor model of the tunnel for positioning or route planning of a mobile object in the underground tunnel. For example, the floor model may be thus stored in a database accessible by a positioning unit or application or a route planning unit or application of a worksite server or a mine vehicle. The floor model is applied as a map of the tunnel.

The term floor model refers generally to a model comprising a set of points indicative of the tunnel floor at least in horizontal plane, i.e. 2D or x, y coordinates. Such points may also be referred to as floor points. In some embodiments, the 3D model of the tunnel comprises point cloud data generated on the basis of scanning the tunnel and the floor model is a point cloud model of the floor comprising a sub-set of points extracted from the 3D point cloud data for representing the floor of the tunnel. The floor model may be applied as a map for the mobile object movement tracking as presently disclosed, and the floor points may thus be considered as map points. The floor model may comprise also vertical plane, i.e. height or z coordinate data and/or supplementary data for at least some of the floor points. It is to be appreciated that the floor model does not necessarily define the absolutely lowest bottom level of the underground tunnel, but it may instead be more feasible to extract the floor model and floor points defining accessible areas at some height from the tunnel bottom.

It will be appreciated that Figure 3 illustrates general features related to the underground mobile object position tracking and various additions and amendments may be applied, some further embodiments being illustrated below.

In some embodiments only a subset of the points of the 3D model is applied as an input data set for floor point identification 31. Hence, there may be an additional preprocessing or filtering step before block 31. For example, it may be adequate to use reduced resolution or amount of points, in which case the subset according to the adequate resolution may be uniformly selected for block 31, e.g. only 40% of the points are selected. For example, the distance between the floor points is in the range between 0.1 to 2 meters.

In another example embodiment, the model processing algorithm may be configured to detect and exclude certain portions of the 3D model that are irrelevant for block 31 on the basis of an associated indication in such data portions. For example, knowledge of measurement direction based on rough sensor orientation information may be used, if such knowledge is available.

In some embodiments, a floor point probability indicator is calculated for each point floor point candidate, which may be points in the subset of the 3D model. The floor point probability value may also be referred to as a floor point qualification value and refers generally to a value associated with likelihood of the given model point location belonging to the floor level of the tunnel. The floor point probability of each floor point candidate may be compared to at least one threshold value, which may be in some embodiment define a floor point margin, such as an angle range, for qualifying as floor points. Such floor point candidates having a floor point probability within the floor point margin are identified 31 and selected/extracted 32 as the floor points.

Figure 4 further illustrates identification and extraction of the floor points according to some embodiments. A sub-set of points of the 3D model is selected 40. Surface normal is determined 41 for each of the points in the selected sub-set. The floor points are selected 42 on the basis of the surface normal directions of the points in the subset.

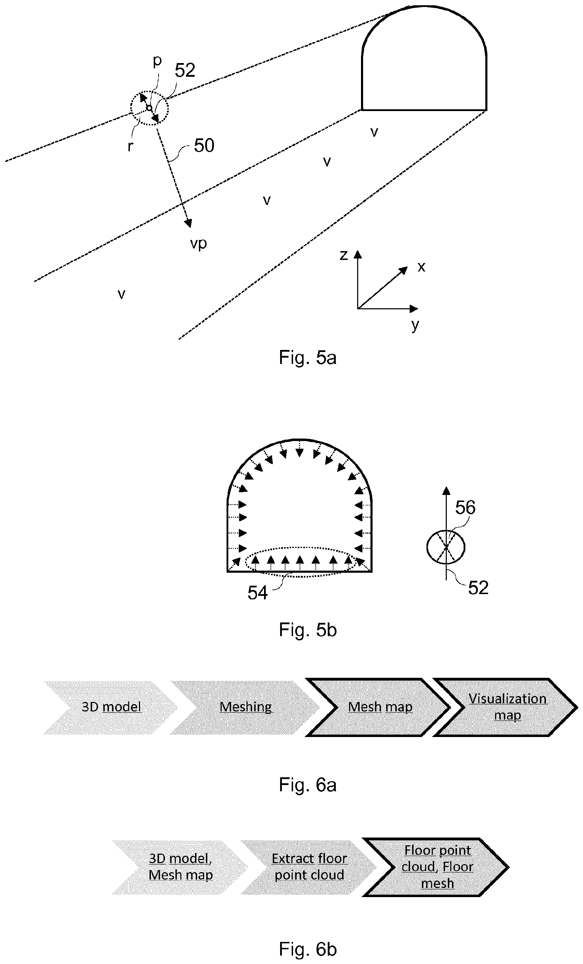

With reference to Figure 5a, the surface normal calculation 41 may comprise carrying out the steps below for each point p being analysed in the sub-set points of the 3D model:
- Select points closer than radius r from the analysed point p.
- Fit a plane to the selected points. The normal of the plane is the normal of the analysed point p.
- For the normal of the analysed point p, there are two options. To consistently select the normal that points inside the tunnel, a concept of viewpoints may be applied:
   ∘ Introduce a list of viewpoints v that are inside the tunnel. For example, a list of machine locations in 3D or scanner or survey equipment locations at the time of measurement. These can also be the planned tunnel center lines.
- For the analysed point *p*, find the closest viewpoint *vp*. Calculate a vector 50 from *p* to *vp*. From the options for normal vector for *p*, select the one whose dot product to the viewpoint vector is positive.

A point in the subset having its surface normal pointing substantially in the vertical direction may be identified as floor point. Thus, the normal may point substantially downwards or upwards, depending on the selection of the normal direction in or out from the tunnel. A parameter indicative of an allowed angle range or deviation from the vertical axis may be predefined and applied in block 31, 42 for points to qualify as floor points. For example, maximum deviation from the vertical axis in the area of 0 to 45 degrees may be selected, or further e.g. around 20, 25, or 30 degrees.

The floor point selection 42 may comprise carrying out the steps below for each point *p* being analysed in the sub-set:
- Receive or calculate surface normal for all points in the sub-set. It is ensured that the surface normals are pointing logically inside (or outside) the tunnel, as illustrated in the simplified Figure 5b.
- Calculate the dot product or angle to a vertical direction vector 52, which may be an "upward" vector in the example of Figure 5b. It is to be noted that alternatively a "downward" vector could be applied.
- Select, as a set 54 of floor points, points having their surface normal angle to the vertical direction vector within predetermined range 56 configured for floor points.

With reference to Figure 6a, a mesh model or map may be generated on the basis of applying meshing of at least part of the 3D model. The mesh model may be applied as the floor model, or in addition to a floor model comprising the floor points. The mesh model may be applied for visualization and analysis of the mine. In some embodiments, a visualization map is generated on the basis of the mesh model and/or the floor model.

In an embodiment, the floor mesh model is extracted from a 3D mesh model of the tunnel. The floor mesh model may be extracted on the basis of vertice distance from a floor point cloud model.

Alternatively, the mesh floor model can be generated on the basis of the entire 3D point cloud model of the mine, but only a subset of the 3D model close to identified floor points are selected later to represent a floor mesh surface. In an embodiment, the floor model in the form of a point cloud model is extracted from the 3D model on the basis of point distance from the floor mesh model.

The simplified Figure 6b illustrates an embodiment, in which a 3D point cloud model and a mesh model of the worksite are applied as input data for the model processing procedure/algorithm, the output data of which comprises a floor point cloud and a floor mesh (model).

It is to be noted that the 3D mine model may be repetitively updated. For example a drill rig or a load&haul vehicle may be configured to scan their operating area in the tunnel at every round to update the mine model with the excavation progress. In some embodiments, the update of the (mine) 3D model triggers automatic update of the floor model and possible further associated models, such as a surface mesh model, to match the updated model. Hence, the floor model may be updated in response to detecting update of the three-dimensional model.

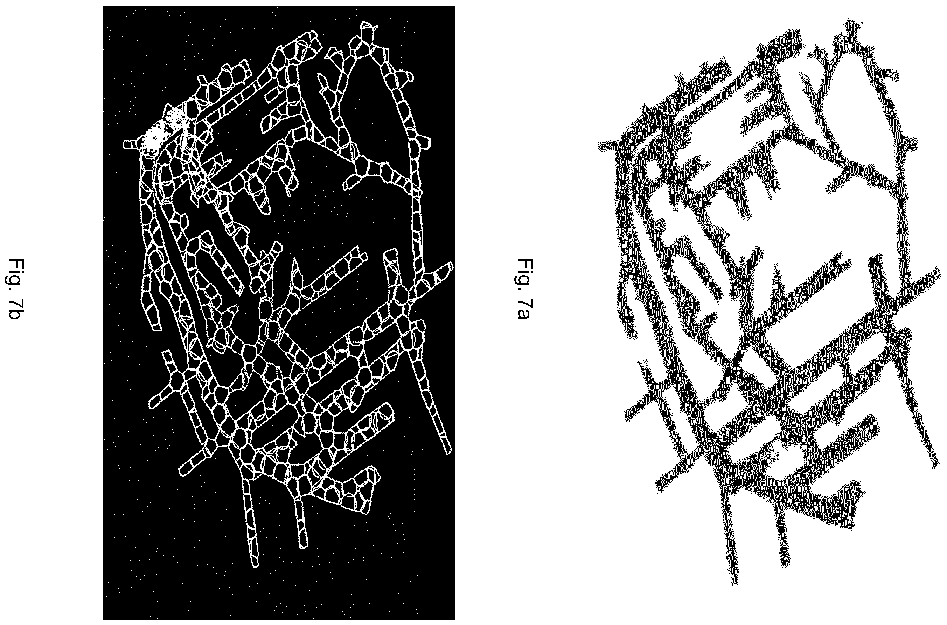

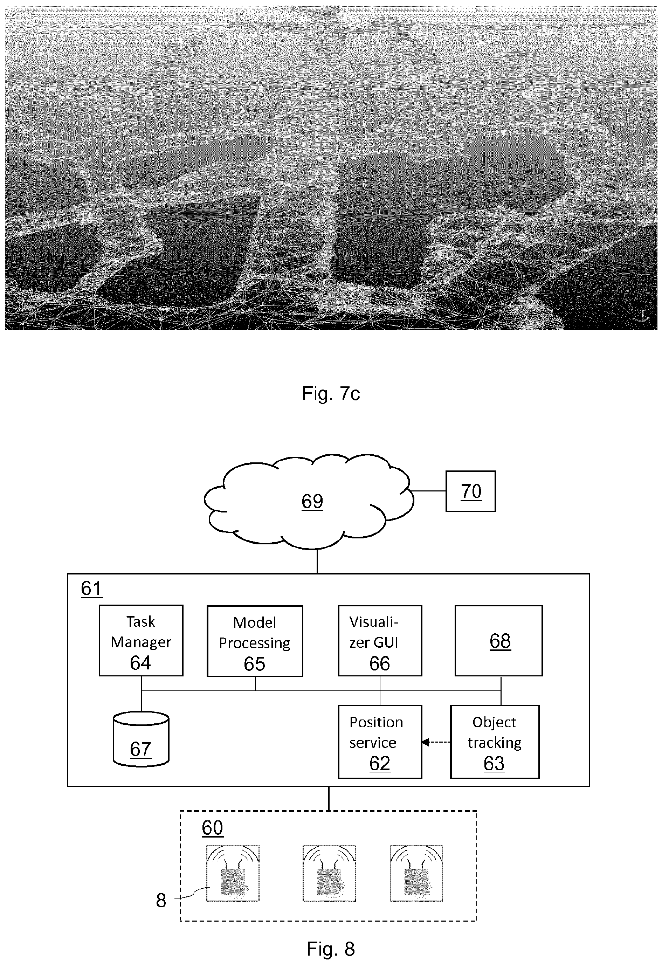

Figures 7a to 7c illustrate examples of floor models. Figure 7a illustrates a floor model in the form of a point cloud, 7b illustrates a floor model represented as polygons, and 7c illustrates a floor model in triangle mesh representation.

In some embodiments, the floor model is applied by a positioning unit or application configured to position a mobile object, such as a mobile vehicle 4 or a pedestrian 3 on the basis of the floor model and horizontal progression of the mobile vehicle or the pedestrian. The method for positioning a mobile object 3, 4 on the basis of the floor model may comprise:
- determining horizontal progression of a mobile object in an underground tunnel since a preceding position estimate or an initial position of the mobile object,
- determining horizontal position of the mobile object on the basis of the floor model of the tunnel and the estimated horizontal progression of the mobile object, and
- generating a 3D position indicator on the basis of the horizontal position of the mobile object and the 3D model.

The determination of the horizontal position may be based on particle filtering and comprise:
- establishing a set of particles representative of position estimate options for the mobile object, the particles being associated with a position value,
- updating the position of each of the particles on the basis of the estimated horizontal progression of the mobile object, and
- fusing the updated positions of the particles with the floor model.

In some embodiments, the fusing comprises: comparing the updated positions of the particles to a sub-set of the floor point locations, filtering out particles that have no floor points within a threshold distance, and assigning, for each particle, a location of a closest floor point within a threshold distance.

The particles may have an initial location in 3D (x, y, z) and may be based on the estimated horizontal progression moved to new locations in xy plane while the z plane/position remains unchanged. After all particles have been moved (in 2D), their updated positions are compared to the positions of the floor model. For each particle in the set, a floor point closest to the respective particle is determined and the particle is moved to, or assigned with the closest floor point location, thus causing the particles to move along the floor model. Particle movement calculation may thus be simplified and done in 2D while the results are transferred to 3D. Such method may also be referred to as mobile object dead reckoning along a 3D map. The solution does not require for example altitude meters or similar additional sensors.

According to an embodiment, the vehicle 4-7 provided with a scanning device is serving as a mobile surveying device. The vehicle may execute the surveying continuously when carrying out dedicated normal operations of the vehicle. If the vehicle is a rock drilling rig or a reinforcing rig, it may scan the surroundings when it stops at a work site for executing drilling or feeding reinforcing elements or material. It may also be defined that the scanning is executed at least once each time when the vehicle is not moving. Thanks to this procedure, the mine may be surveyed repeatedly and in parallel to the normal operational process without any need for extra resources. The 3D model and the resulting floor model of the mine may thus be accurate and updated continuously.

The floor model may be applied in various ways, only some examples being illustrated herein. In some embodiments, the mobile object is displayed based on the 3D position indicator on a 3D map based on the 3D model. In some embodiments, the 3D position indicator is provided as an input for a collision avoidance system. In some embodiments, the 3D position indicator is provided as an input for updating position of other mobile object(s).

In some embodiments, the floor model is applied by a route planning application for route calculation. The route planning application may be configured to calculate a route on the basis of the floor model, along the floor defined by the floor points. A simplified floor model is preferred to route planning algorithms instead of full 3D model, since all route planning is naturally happening along the floor where pedestrians and vehicles move. Roof and walls are unnecessary information for the route planning problem.

In some embodiments, the floor model is applied by a navigation application controlling an autonomously operating mobile vehicle. The navigation application may comprise the positioning unit illustrated above, apply the 3D position indicator, and/or apply the floor model for vehicle path definition and/or manoeuvre control along the floor defined by the floor points.

Figure 8 illustrates an example of a system for underground worksite. The system comprises a wireless access network 60 comprising a plurality of access nodes 8 for wireless communication with communication devices of mobile objects 3-7 in the tunnels. The system comprises a server 61, which may comprise one or more above or underground computing units. The server 61 is configured to perform at least some of the above illustrated features related to mobile object positioning, such as the methods of Figures 3 and 4 on the basis of signals received from mobile object(s) via the access network 60.

Figure 8 illustrates operational modules 62-68 of the server 61 according to some embodiments. An object tracking module 63 is configured to perform the method of Figure 3 and provide the generated 3D position indicator to further modules, in some embodiments a position service module 62.

The server 61 may comprise a task manager or management module 64, which is configured to manage at least some operations at the worksite. For example, the task manager may be configured to assign work tasks for a fleet of vehicles and update and/or monitor task performance and status, which is indicated at a task management GUI.

The server 61 may comprise a model processing module 65, which may maintain one or more models of the underground worksite, such as the floor model and the 3D mine model. In some embodiments, the model processing module 65 is configured to generate the floor model and store it to the database or storage 67.

The server 61 may comprise a visualizer GUI module 66, which is configured to generate at least some display views for an operator (locally and/or remotely). In some embodiments, the visualizer GUI module 66 is configured to generate, on the basis of the 3D model or floor model, a 3D (and/or 2D) view indicating the current position of the mobile object.

The server 61 may comprise further module(s) 68, such as a remote monitoring process and UI, and/or a cloud dispatcher component configured to provide selected worksite information, such as the mobile object position information to a cloud service.

The system and server 61 may be connected to a further system 70 and/or network 69, such a worksite management system, a cloud service, an intermediate communications network, such as the internet, etc. The system may further comprise or be connected to a further device or control unit, such as a handheld user unit, a vehicle unit, a worksite management device/system, a remote control and/or monitoring device/system, data analytics device/system, sensor system/device, etc.

The object tracking 63 may be implemented as part of another module, such as the position service module 62. The position service 62 is configured to provide, upon request or by push transmission, mobile object position information obtained from or generated on the basis of information from the object tracking 63 for relevant other modules or functions, such as the database 67, the visualizer graphical user interface 66, and/or remote units or systems 70 via one or more networks 69. In the example of Figure 8 the modules are illustrated as inter-connected, but it is to be appreciated that not all modules need to be connectable.

The system may comprise or be connected to a vehicle control unit or module for which the floor model and/or position information on the basis of the floor model may be transmitted. The vehicle control unit may be provided in each autonomously operating vehicle and be configured to control at least some autonomous operations of the vehicle on the basis of the 3D location indicators. For example, in response to detecting a person to enter a zone comprising an autonomously operating vehicle, the control unit may be configured to send a control command to stop the vehicle.

An electronic device comprising electronic circuitries may be an apparatus for realizing at least some embodiments of the present invention, such as the main operations illustrated in connection with Figure 3. The apparatus may be comprised in at least one computing device connected to or integrated into a control system which may be part of a worksite control or automation system.

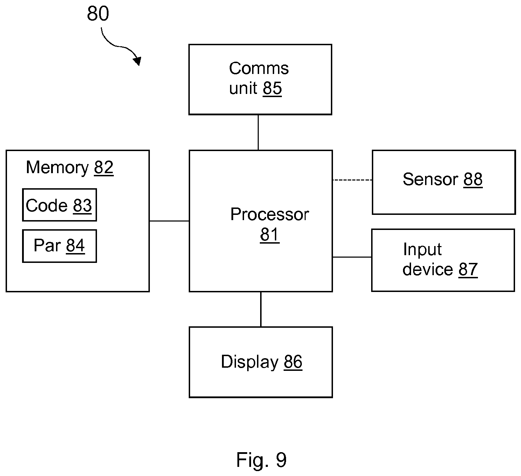

Figure 9 illustrates an example apparatus capable of supporting at least some embodiments of the present invention. Illustrated is a device 80, which may be configured to carry out at least some of the embodiments relating to the mobile object position tracking illustrated above. In some embodiments, the device 80 comprises or implements the server 61 and/or the model processing module 65 of Figure 8. In another embodiment, the device is comprised or carried by the mobile object 3-7, such as a mobile communications device or a vehicle control unit, configured to carry out at least some of the embodiments relating to the floor model illustrated above.

Comprised in the device 80 is a processor 81, which may comprise, for example, a single- or multi-core processor. The processor 81 may comprise more than one processor. The processor may comprise at least one application-specific integrated circuit, ASIC. The processor may comprise at least one field-programmable gate array, FPGA. The processor may be configured, at least in part by computer instructions, to perform actions.

The device 80 may comprise memory 82. The memory may comprise randomaccess memory and/or permanent memory. The memory may be at least in part accessible to the processor 81. The memory may be at least in part comprised in the processor 81. The memory may be at least in part external to the device 80 but accessible to the device. The memory 82 may be means for storing information, such as parameters 84 affecting operations of the device. The parameter information in particular may comprise parameter information affecting e.g. the floor model generation and application, such as threshold values.

The memory 82 may comprise computer program code 83 including computer instructions that the processor 81 is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The processor may, together with the memory and computer program code, form means for performing at least some of the above-illustrated method steps in the device.

The device 80 may comprise a communications unit 85 comprising a transmitter and/or a receiver. The transmitter and the receiver may be configured to transmit and receive, respectively, information in accordance with at least one cellular or non-cellular standard. The transmitter and/or receiver may be configured to operate in accordance with global system for mobile communication, GSM, wideband code division multiple access, WCDMA, long term evolution, LTE, 3GPP new radio access technology (N-RAT), wireless local area network, WLAN, Ethernet and/or worldwide interoperability for microwave access, WiMAX, standards, for example. The device 80 may comprise a near-field communication, NFC, transceiver. The NFC transceiver may support at least one NFC technology, such as NFC, Bluetooth, or similar technologies.

The device 80 may comprise or be connected to a UI. The UI may comprise at least one of a display 86, a speaker, an input device 87 such as a keyboard, a joystick, a touchscreen, and/or a microphone. The UI may be configured to display views on the basis of the worksite model(s) and the mobile object position indicators. A user may operate the device and control at least some features of a control system, such as the system illustrated in Figure 6. In some embodiments, the user may control a vehicle 4-7 and/or the server via the UI, for example to change operation mode, change display views, modify parameters 84 in response to user authentication and adequate rights associated with the user, etc.

The device 80 may further comprise and/or be connected to further units, devices and systems, such as one or more sensor devices 88 sensing environment of the device 80. The sensor device may comprise an IMU or another type of sensor device configured to determine movements of a mobile object.

The processor 81, the memory 82, the communications unit 85 and the UI may be interconnected by electrical leads internal to the device 80 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

### INDUSTRIAL APPLICABILITY

At least some embodiments of the present invention find industrial application at least in underground mining.

### ACRONYMS LIST

- ASIC: Application-specific integrated circuit
- CAD: Computer-aided design
- FPGA: Field-programmable gate array
- GNSS: Global navigation satellite system
- GSM: Global system for mobile communication
- GUI: Graphical user interface
- IMU: Inertial measurement unit
- LTE: Long term evolution
- MAC: Medium access control
- NFC: Near-field communication
- N-RAT: 3GPP new radio access technology
- PDR: Pedestrian dead reckoning
- UI: User interface
- WCDMA: Wideband code division multiple access
- WiMAX: Worldwide interoperability for microwave access
- WLAN: Wireless local area network

## Claims

1. An apparatus for generating a floor model of an underground tunnel for a positioning unit of a navigation application controlling an autonomously operating vehicle, the apparatus comprising at least one processor, and at least one memory including computer program code, the at least one memory and computer program code configured to, with the at least one processor, cause the apparatus to:
- receive (30) a three-dimensional model of an underground tunnel,
- identify (31) floor points among points of the three-dimensional model of the underground tunnel by detecting points on a bottom floor level (21) of the tunnel on the basis of performing one or more evaluation or filtering procedures;
- extract (32) the floor points by forming a further dataset on the basis of the identified floor points, and
- provide to the positioning unit at least a part of the extracted floor points as a floor model of the tunnel for applying (33) the floor model as a map of the tunnel for positioning or route planning of a mobile object (3, 4) in the underground tunnel along the floor defined by the floor points.

2. The apparatus of claim 1, wherein the apparatus is configured to apply a subset of points of the three-dimensional model of the underground tunnel as input data for identifying (31) the floor points among points of the three-dimensional model, calculate a floor point probability indicator for point floor point candidates in the subset on the basis of surface normal directions of the floor point candidates, and identify (31) as the floor points floor point candidates having a floor point probability within a floor point probability margin defining an allowed angle range of a surface normal from a vertical axis.

3. The apparatus of any preceding claim, wherein the identifying (31) the floor points comprises:
- determining (41) surface normal for each of points in a sub-set of points of the three-dimensional model on the basis of a set of neighbouring points, and
- selecting (42) points as the floor points on the basis of the surface normal directions of the points in the sub-set of points.

4. The apparatus of any preceding claim, wherein the three-dimensional model comprises three-dimensional point cloud data generated on the basis of scanning the tunnel and the floor model is a point cloud model comprising a sub-set of points extracted from the three-dimensional point cloud data for representing the floor of the tunnel.

5. The apparatus of claim any preceding claim 1 to 3, wherein the three-dimensional model is a mesh or surface model and the floor model is a mesh or surface model of the floor of the tunnel.

6. The apparatus of any preceding claim, comprising a model processing module, configured to generate the floor model on the basis of the three-dimensional model, and a visualizer module configured to generate, on the basis of the three-dimensional model or the floor model, a 3D view indicating current position of the mobile object.

7. The apparatus of any preceding claim, the apparatus being further configured to: apply the floor model by a route planning application for route calculation.

8. The apparatus of any preceding claim, wherein the apparatus being further configured to: apply the floor mode by a navigation application controlling an autonomously operating mobile vehicle (4).

9. The apparatus of any preceding claim, wherein the floor model comprises a set of points indicative of the tunnel floor at least in 2D coordinates, the apparatus being further configured to: apply the floor model by a positioning application configured to determine a horizontal position of a mobile vehicle (4) or a pedestrian (3) on the basis of the floor model and horizontal progression of the mobile vehicle or the pedestrian since a preceding position estimate or an initial position of the mobile object.

10. The apparatus of any preceding claim, wherein the floor model is updated in response to detecting update of the three-dimensional model.

11. A method for generating a floor model of an underground tunnel for a positioning unit of a navigation application controlling an autonomously operating vehicle, the method being performed by an apparatus comprising at least one processor, and at least one memory including computer program code, the at least one memory and computer program code configured to, with the at least one processor cause the apparatus to perform the method comprising:
- receiving (30) a three-dimensional model of an underground tunnel,
- identifying (31) floor points among points of the three-dimensional model of the underground tunnel by detecting points on a bottom floor level (21) of the tunnel on the basis of performing one or more evaluation or filtering procedures;
- extracting (32) the floor points by forming a further dataset on the basis of the identified floor points, and
- providing to the positioning unit at least a part of the extracted floor points as a floor model of the tunnel for applying (33) the floor model as a map of the tunnel for positioning or route planning of a mobile object (3, 4) in the underground tunnel along the floor defined by the floor points.

12. The method of claim 11, further comprising:
- applying a subset of points of the three-dimensional model of the underground tunnel as input data for identifying (31) the floor points among points of the three-dimensional model,
- calculating a floor point probability for floor point candidates in the subset on the basis of surface normal directions of the floor point candidates, and
- identifying as the floor points floor point candidates having a floor point probability within a floor point margin defining an allowed range of a surface normal from a vertical axis.

13. The method of claim 11 or 12, wherein the identifying (31) the floor points comprises:
- determining (41) surface normal for each of points in a sub-set of points of the three-dimensional model on the basis of a set of neighbouring points, and
- selecting (42) points as the floor points on the basis of the surface normal directions of the points in the sub-set of points.

14. The method of any preceding claim, further comprising: updating the floor model in response to detecting update of the three-dimensional model.

15. A computer program comprising code for, when executed in a data processing apparatus (80), to cause a method in accordance with any one of claims 11 to 14 to be performed.

## Patentansprüche

1. Einrichtung zum Erzeugen eines Bodenmodells eines unterirdischen Tunnels für eine Positionierungseinheit einer Navigationsanwendung, die ein autonom betriebenes Fahrzeug steuert, wobei die Einrichtung mindestens einen Prozessor und mindestens einen Speicher, der einen Computerprogrammcode beinhaltet, umfasst, wobei der mindestens eine Speicher und Computerprogrammcode konfiguriert sind, um mit dem mindestens einen Prozessor die Einrichtung zu Folgendem zu veranlassen:
- Empfangen (30) eines dreidimensionalen Modells eines unterirdischen Tunnels,
- Identifizieren (31) von Bodenpunkten unter Punkten des dreidimensionalen Modells des unterirdischen Tunnels durch Detektieren von Punkten auf einer unteren Bodenebene (21) des Tunnels auf der Basis eines Durchführens einer oder mehrerer Auswertungs- oder Filterprozeduren;
- Extrahieren (32) der Bodenpunkte durch Bilden eines weiteren Datensatzes auf der Basis der identifizierten Bodenpunkte und
- Bereitstellen, an die Positionierungseinheit, mindestens eines Teils der extrahierten Bodenpunkte als ein Bodenmodell des Tunnels zum Anwenden (33) des Bodenmodells als eine Karte des Tunnels zur Positionierungs- oder Routenplanung eines mobilen Objekts (3, 4) in dem unterirdischen Tunnel entlang des Bodens, der durch die Bodenpunkte definiert ist.

2. Einrichtung nach Anspruch 1, wobei die Einrichtung konfiguriert ist, einen Teilsatz von Punkten des dreidimensionalen Modells des unterirdischen Tunnels als Eingangsdaten zum Identifizieren (31) der Bodenpunkte unter Punkten des dreidimensionalen Modells anzuwenden, einen Bodenpunkt-Wahrscheinlichkeitsindikator für Punkt-Bodenpunkt-Kandidaten in dem Teilsatz auf der Basis von Richtungen der Oberflächennormale der Bodenpunktkandidaten zu berechnen und als die Bodenpunkte Bodenpunktkandidaten zu identifizieren (31), die eine Bodenpunktwahrscheinlichkeit innerhalb eines Bodenpunktwahrscheinlichkeitsspielraums aufweisen, der einen zulässigen Winkelbereich einer Oberflächennormale von einer vertikalen Achse definiert.

3. Einrichtung nach einem vorstehenden Anspruch, wobei das Identifizieren (31) der Bodenpunkte umfasst:
- Bestimmen (41) einer Oberflächennormale für jeden von Punkten in einem Teilsatz von Punkten des dreidimensionalen Modells auf der Basis eines Satzes benachbarter Punkte und
- Auswählen (42) von Punkten als die Bodenpunkte auf der Basis der Richtungen der Oberflächennormale der Punkte in dem Teilsatz von Punkten.

4. Einrichtung nach einem vorstehenden Anspruch, wobei das dreidimensionale Modell dreidimensionale Punkt-Cloud-Daten umfasst, die auf der Basis einer Abtastung des Tunnels erzeugt werden, und das Bodenmodell ein Punkt-Cloud-Modell ist, das einen Teilsatz von Punkten umfasst, der aus den dreidimensionalen Punkt-Cloud-Daten extrahiert wird, um den Boden des Tunnels darzustellen.

5. Einrichtung nach einem vorstehenden Anspruch 1 bis 3, wobei das dreidimensionale Modell ein Gitter- oder Oberflächenmodell ist und das Bodenmodell ein Gitter- oder Oberflächenmodell des Bodens des Tunnels ist.

6. Einrichtung nach einem vorstehenden Anspruch, die ein Modellverarbeitungsmodul, das konfiguriert ist, das Bodenmodell auf der Basis des dreidimensionalen Modells zu erzeugen, und ein Visualisierungsmodul umfasst, das konfiguriert ist, auf der Basis des dreidimensionalen Modells oder des Bodenmodells eine 3D-Ansicht zu erzeugen, die eine aktuelle Position des mobilen Objekts anzeigt.

7. Einrichtung nach einem vorstehenden Anspruch, wobei die Einrichtung weiter konfiguriert ist zum: Anwenden des Bodenmodells durch eine Routenplanungsanwendung zur Routenberechnung.

8. Einrichtung nach einem vorstehenden Anspruch, wobei die Einrichtung weiter konfiguriert ist zum: Anwenden des Bodenmodells durch eine Navigationsanwendung, die ein autonom betriebenes mobiles Fahrzeug (4) steuert.

9. Einrichtung nach einem vorstehenden Anspruch, wobei das Bodenmodell einen Satz von Punkten umfasst, der den Tunnelboden mindestens in 2D-Koordinaten anzeigt, wobei die Einrichtung weiter konfiguriert ist zum: Anwenden des Bodenmodells durch eine Positionierungsanwendung, die konfiguriert ist, eine horizontale Position eines mobilen Fahrzeugs (4) oder eines Fußgängers (3) auf der Basis des Bodenmodells und einer horizontalen Fortbewegung des mobilen Fahrzeugs oder des Fußgängers seit einer vorangehenden Positionsschätzung oder einer anfänglichen Position des mobilen Objekts zu bestimmen.

10. Einrichtung nach einem vorstehenden Anspruch, wobei das Bodenmodell in Reaktion auf Detektieren einer Aktualisierung des dreidimensionalen Modells aktualisiert wird.

11. Verfahren zum Erzeugen eines Bodenmodells eines unterirdischen Tunnels für eine Positionierungseinheit einer Navigationsanwendung, die ein autonom betriebenes Fahrzeug steuert, wobei das Verfahren von einer Einrichtung durchgeführt wird, die mindestens einen Prozessor und mindestens einen Speicher, der einen Computerprogrammcode beinhaltet, umfasst, wobei der mindestens eine Speicher und Computerprogrammcode konfiguriert sind, mit dem mindestens einen Prozessor die Einrichtung zu veranlassen, das Verfahren durchzuführen, umfassend:
- Empfangen (30) eines dreidimensionalen Modells eines unterirdischen Tunnels,
- Identifizieren (31) von Bodenpunkten unter Punkten des dreidimensionalen Modells des unterirdischen Tunnels durch Detektieren von Punkten auf einer unteren Bodenebene (21) des Tunnels auf der Basis eines Durchführens einer oder mehrerer Auswertungs- oder Filterprozeduren;
- Extrahieren (32) der Bodenpunkte durch Bilden eines weiteren Datensatzes auf der Basis der identifizierten Bodenpunkte und
- Bereitstellen, an die Positionierungseinheit, mindestens eines Teils der extrahierten Bodenpunkte als ein Bodenmodell des Tunnels zum Anwenden (33) des Bodenmodells als eine Karte des Tunnels zur Positionierungs- oder Routenplanung eines mobilen Objekts (3, 4) in dem unterirdischen Tunnel entlang des Bodens, der durch die Bodenpunkte definiert ist.

12. Verfahren nach Anspruch 11, weiter umfassend:
- Anwenden eines Teilsatzes von Punkten des dreidimensionalen Modells des unterirdischen Tunnels als Eingangsdaten zum Identifizieren (31) der Bodenpunkte unter Punkten des dreidimensionalen Modells,
- Berechnen einer Bodenpunktwahrscheinlichkeit für Bodenpunktkandidaten in dem Teilsatz auf der Basis von Richtungen einer Oberflächennormale der Bodenpunktkandidaten und
- Identifizieren von Bodenpunktkandidaten, die eine Bodenpunktwahrscheinlichkeit innerhalb eines Bodenpunktwahrscheinlichkeitsspielraums aufweisen, der einen zulässigen Bereich einer Oberflächennormale von einer vertikalen Achse definiert, als die Bodenpunkte.

13. Verfahren nach Anspruch 11 oder 12, wobei das Identifizieren (31) der Bodenpunkte umfasst:
- Bestimmen (41) einer Oberflächennormale für jeden von Punkten in einem Teilsatz von Punkten des dreidimensionalen Modells auf der Basis eines Satzes benachbarter Punkte und
- Auswählen (42) von Punkten als die Bodenpunkte auf der Basis der Richtungen der Oberflächennormale der Punkte in dem Teilsatz von Punkten.

14. Verfahren nach einem vorstehenden Anspruch, weiter umfassend: Aktualisieren des Bodenmodells in Reaktion auf Detektieren einer Aktualisierung des dreidimensionalen Modells.

15. Computerprogramm, das einen Code umfasst, um, wenn in einer Datenverarbeitungseinrichtung (80) ausgeführt, Durchführen eines Verfahrens nach einem der Ansprüche 11 bis 14 zu veranlassen.

## Revendications

1. Appareil pour générer un modèle de sol d'un tunnel souterrain pour une unité de positionnement d'une application de navigation commandant un véhicule à fonctionnement autonome, l'appareil comprenant au moins un processeur, et au moins une mémoire incluant un code de programme informatique, la au moins une mémoire et le code de programme informatique étant configurés pour, avec le au moins un processeur, faire en sorte que l'appareil :
- reçoive (30) un modèle tridimensionnel d'un tunnel souterrain,
- identifie (31) des points de sol parmi des points du modèle tridimensionnel du tunnel souterrain en détectant des points sur un niveau de sol inférieur (21) du tunnel, sur la base de la réalisation d'une ou de plusieurs procédures d'évaluation ou de filtrage ;
- extraie (32) les points de sol en formant un jeu supplémentaire de données, sur la base des points de sol identifiés, et
- fournisse, à l'unité de positionnement, au moins une partie des points de sol extraits, en tant que modèle de sol du tunnel, pour appliquer (33) le modèle de sol sous forme de carte du tunnel pour le positionnement ou la planification d'itinéraire d'un objet mobile (3, 4) dans le tunnel souterrain le long du sol défini par les points de sol.

2. Appareil selon la revendication 1, dans lequel l'appareil est configuré pour appliquer un sous-jeu de points du modèle tridimensionnel du tunnel souterrain, en tant que données d'entrée, pour identifier (31) les points de sol parmi des points du modèle tridimensionnel, calculer un indicateur de probabilité de point de sol pour des candidats de point de sol dans le sous-jeu, sur la base de directions de normales de surface des candidats de point de sol, et identifier (31), en tant que points de sol, des candidats de point de sol présentant une probabilité de point de sol au sein d'une marge de probabilité de point de sol définissant une plage d'angle admissible d'une normale de surface par rapport à un axe vertical.

3. Appareil selon une quelconque revendication précédente, dans lequel l'identification (31) des points de sol comprend :
- la détermination (41) d'une normale de surface pour chacun de points dans un sous-jeu de points du modèle tridimensionnel, sur la base d'un jeu de points voisins, et
- la sélection (42) de points, en tant que points de sol, sur la base des directions de normales de surface des points dans le sous-jeu de points.

4. Appareil selon une quelconque revendication précédente, dans lequel le modèle tridimensionnel comprend des données de nuage de points tridimensionnel générées sur la base d'un balayage du tunnel et le modèle de sol est un modèle de nuage de points comprenant un sous-jeu de points extraits des données de nuage de points tridimensionnel pour représenter le sol du tunnel.

5. Appareil selon l'une quelconque des revendications 1 à 3, dans lequel le modèle tridimensionnel est un modèle de maille ou de surface et le modèle de sol est un modèle de maille ou de surface du sol du tunnel.

6. Appareil selon une quelconque revendication précédente, comprenant un module de traitement de modèle, configuré pour générer le modèle de sol sur la base du modèle tridimensionnel, et un module de visualisation configuré pour générer, sur la base du modèle tridimensionnel ou du modèle de sol, une vue 3D indiquant une position actuelle de l'objet mobile.

7. Appareil selon une quelconque revendication précédente, l'appareil étant en outre configuré pour : appliquer le modèle de sol par l'intermédiaire d'une application de planification d'itinéraire pour le calcul d'itinéraire.

8. Appareil selon une quelconque revendication précédente, dans lequel l'appareil est en outre configuré pour : appliquer le mode de sol par l'intermédiaire d'une application de navigation commandant un véhicule mobile à fonctionnement autonome (4).

9. Appareil selon une quelconque revendication précédente, dans lequel le modèle de sol comprend un jeu de points indicatifs du sol de tunnel au moins en coordonnées 2D, l'appareil étant en outre configuré pour : appliquer le modèle de sol par l'intermédiaire d'une application de positionnement configurée pour déterminer une position horizontale d'un véhicule mobile (4) ou d'un piéton (3), sur la base du modèle de sol et de la progression horizontale du véhicule mobile ou du piéton depuis une estimation de position précédente ou une position initiale de l'objet mobile.

10. Appareil selon une quelconque revendication précédente, dans lequel le modèle de sol est mis à jour en réponse à la détection d'une mise à jour du modèle tridimensionnel.

11. Procédé pour générer un modèle de sol d'un tunnel souterrain pour une unité de positionnement d'une application de navigation commandant un véhicule à fonctionnement autonome, le procédé étant réalisé par un appareil comprenant au moins un processeur, et au moins une mémoire incluant un code de programme informatique, la au moins une mémoire et le code de programme informatique étant configurés pour, avec le au moins un processeur, faire en sorte que l'appareil réalise le procédé comprenant :
- la réception (30) d'un modèle tridimensionnel d'un tunnel souterrain,
- l'identification (31) de points de sol parmi des points du modèle tridimensionnel du tunnel souterrain en détectant des points sur un niveau de sol inférieur (21) du tunnel, sur la base de la réalisation d'une ou de plusieurs procédures d'évaluation ou de filtrage ;
- l'extraction (32) des points de sol en formant un jeu supplémentaire de données, sur la base des points de sol identifiés, et
- la fourniture, à l'unité de positionnement, d'au moins une partie des points de sol extraits en tant que modèle de sol du tunnel pour l'application (33) du modèle de sol sous forme de carte du tunnel pour le positionnement ou la planification d'itinéraire d'un objet mobile (3, 4) dans le tunnel souterrain le long du sol défini par les points de sol.

12. Procédé selon la revendication 11, comprenant en outre :
- l'application d'un sous-jeu de points du modèle tridimensionnel du tunnel souterrain, en tant que données d'entrée, pour l'identification (31) des points de sol parmi des points du modèle tridimensionnel,
- le calcul d'une probabilité de point de sol pour des candidats de point de sol dans le sous-jeu, sur la base de directions de normales de surface des candidats de point de sol, et
- l'identification, en tant que points de sol, de candidats de point de sol présentant une probabilité de point de sol au sein d'une marge de point de sol définissant une plage admissible d'une normale de surface par rapport à un axe vertical.

13. Procédé selon la revendication 11 ou 12, dans lequel l'identification (31) des points de sol comprend :
- la détermination (41) d'une normale de surface pour chacun de points dans un sous-jeu de points du modèle tridimensionnel, sur la base d'un jeu de points voisins, et
- la sélection (42) de points, en tant que points de sol, sur la base des directions de normales de surface des points dans le sous-jeu de points.

14. Procédé selon une quelconque revendication précédente, comprenant en outre : la mise à jour du modèle de sol en réponse à la détection d'une mise à jour du modèle tridimensionnel.

15. Programme informatique, comprenant un code pour, lorsqu'il est exécuté dans un appareil de traitement de données (80), faire en sorte qu'un procédé selon l'une quelconque des revendications 11 à 14 soit réalisé.
